# EUROPÄISCHE PATENTSCHRIFT

(11) **EP 2 505 808 B1**
(45) Veröffentlichungstag und Bekanntmachung des Hinweises auf die Patenterteilung: **06.05.2020**
(21) Anmeldenummer: 12161477.0
(22) Anmeldetag: 27.03.2012
(51) Int. Cl.: F02C 7/22, F23R 3/28, F23R 3/14

(54) **Vorrichtung zum Mischen von Treibstoff und Luft eines Strahltriebwerks**
Device for mixing fuel and air of a turbojet engine
Dispositif de mélange de carburant et d'air dans un moteur à réaction

(30) Priorität: 28.03.2011 DE 102011006241
(43) Veröffentlichungstag der Anmeldung: 03.10.2012
(73) Patentinhaber: Rolls-Royce Deutschland Ltd & Co KG, 15827 Blankenfelde-Mahlow (DE)
(72) Erfinder: Clemen, Carsten, 15749 Mittenwalde (DE); Lazik, Waldemar, 14513 Teltow (DE)
(74) Vertreter: Maikowski & Ninnemann Patentanwälte Partnerschaft mbB

(56) Entgegenhaltungen:
- EP-A2- 1 391 653
- EP-A2- 2 472 182
- WO-A1-99/06767
- WO-A2-98/28574
- JP-A- 2006 336 997
- US-A- 4 364 522
- US-A1- 2004 050 061

## Beschreibung

Die Erfindung betrifft eine Vorrichtung zum Mischen von Treibstoff und Luft eines Strahltriebwerkes gemäß der im Oberbegriff des Patentanspruches 1 näher definierten Art.

Aus der Praxis bekannte Strahltriebwerke bzw. Gasturbinen arbeiten nach dem Prinzip des Rückstoßantriebes. Im Betrieb saugen Strahltriebwerke die Umgebungsluft an und stoßen Verbrennungsprodukte und zum Teil Luft als heißen Antriebsstrahl wieder aus, wobei durch den Rückstoß eine Schubkraft erzeugt wird. Die angesaugte Umgebungsluft wird im Bereich eines Verdichters jeweils komprimiert. In einer nachfolgenden Brennkammer wird der Treibstoff, der in der Regel Kerosin ist, in den Luftstrom eingespritzt und anschließend in der Brennkammer verbrannt. Beim Triebwerksstart wird das Luft-Treibstoff-Gemisch durch Zündkerzen in der Brennkammer gezündet. Anschließend erfolgt die Verbrennung des in der Brennkammer vorhandenen Luft-Treibstoff-Gemisches ohne Fremdzündung kontinuierlich.

So genannte Ringbrennkammeranordnungen stellen ein gasdynamisches Optimum für Strahltriebwerke dar. Sie sind sehr leicht ausführbar und weisen in axialer Richtung eines Strahltriebwerkes einen geringen Bauraumbedarf auf, da zwischen einem Verdichter und einer Turbine eines Strahltriebwerkes jeweils keine Umlenkungen des zu verbrennenden Gemisches in der Brennkammer vorzusehen sind. Der Brennkammer sind mehrere Kraftstoffeinspritzventile bzw. Vorrichtungen zum Mischen von Treibstoff und Luft, auch Brenner genannt, vorgeschaltet, über die der Treibstoff mit einem Luftstrom vermischt und in einen ringförmigen Brennraum eingeleitet wird.

Im Bereich der Vorrichtungen zum Mischen von Luft und Treibstoff wird Luft und Treibstoff durch mehrere Kanäle geführt, wobei der im Strahltriebwerk geführte Luftstrom mit Hilfe von Leitelementen im Bereich der Vorrichtung verdrallt wird, um eine Vermischung zwischen der Luft und dem Treibstoff zu gewährleisten. Die Leitelemente stellen im Allgemeinen profilierte Gitter dar, die auch aus der Verdichter- oder Turbinentechnik bekannt sind. Ihre Anzahl am Umfang des Brenners ist dabei beliebig und es können mehrere Reihen solcher Leitelemente Verwendung finden, je nach dem wie viele Luftkanäle für die Mischung vorhanden sind. Die in Strömungsrichtung des Luftstromes abgewandten Hinterkanten der Leitelemente sind gerade und dünn ausgeführt, um eine verlustarme Abströmung der Profilumströmung bzw. einer freien Strömung um die Leitelemente herum zu gewährleisten.

Nachteilig dabei ist jedoch, dass sich im Betrieb der Strahltriebwerke in so genannten Nachlaufgebieten bzw. Nachlaufbereichen der Leitelemente, die in Bezug auf die Strömungsrichtung des Luftstroms stromab der Hinterkanten der Leitelemente vorliegen, Treibstoff sammelt und keine gleichmäßige Mischung von Luft und Treibstoff erreicht wird. Außerhalb der Nachlaufbereiche sind Treibstoff und Luft gut durchmischt. Die unerwünschte Treibstoffansammlung im Bereich der Nachlaufgebiete, die auch als Totwassergebiete bezeichnet werden, resultiert aus der Tatsache, dass eine Strömungsgeschwindigkeit im Bereich der Nachlaufgebiete nahezu gleich Null ist. Die Durchmischung zwischen dem Luftstrom und dem Treibstoff wird besonders dadurch behindert, dass zwischen der freien Strömung und den Nachlaufgebieten eine Scherschicht entsteht, die eine Durchmischung beider Gebiete verhindert.

Der vorliegenden Erfindung liegt daher die Aufgabe zu Grunde, eine Vorrichtung zum Mischen von Treibstoff und Luft eines Strahltriebwerkes zur Verfügung zu stellen, mittels der eine gute Durchmischung zwischen Luft und Treibstoff erreicht wird und die Ansammlung von Treibstoff in Nachlaufbereichen von Leitelementen auf konstruktiv einfache Art und Weise vermieden wird.

Erfindungsgemäß wird diese Aufgabe mit einer Vorrichtung mit den Merkmalen des Patentanspruches 1 gelöst.

Bei der erfindungsgemäßen Vorrichtung zum Mischen von Treibstoff und Luft eines Strahltriebwerkes mit wenigstens einem Luft führenden Kanal und wenigstens einem weiteren Treibstoff führenden Kanal sind zumindest in dem Luft führenden Kanal sich über die Kanalhöhe erstreckende und über den Umfang des Kanals verteilt angeordnete Leitelemente vorgesehen, in deren Bereich der im Luft führenden Kanal strömenden Luft zur Verbesserung einer Vermischung zwischen der Luft und dem Treibstoff stromab der Kanäle ein Drall aufprägbar ist.

Zur Vermeidung von Treibstoffansammlungen in stromab der Leitelemente vorliegenden Nachlaufgebiet-en sind die Leitelemente in einem in Bezug auf eine Strömungsrichtung der Luft hinteren Endbereich mit gegenüber der Strömungsrichtung mindestens einem wenigstens annähernd zumindest bereichsweise mit spitzer Kante ausgeführten Vor- und/oder Rücksprung ausgebildet. Damit weisen die Leitelemente zumindest bereichsweise jeweils eine vorzugsweise gezackte Hinterkante auf, um stromab der Leitelemente so genannte Hinterkantenwirbel zu erzeugen und eine verbesserte Durchmischung von Luft und Treibstoff zu erreichen. Die Hinterkantenwirbel verhindern die aus der Praxis bekannte Ansammlung von Treibstoff in Nachlaufgebieten der Leitelemente, womit eine verbesserte Vermischung von Luft und Treibstoff und somit auch eine verbesserte Verbrennung des Luft-Treibstoff-Gemisches im Bereich einer der Vorrichtung nachgeschalteten Brennkammer erzielt werden.

Eine besonders gute Vermischung zwischen Luft und Treibstoff wird dann erreicht, wenn der mindestens eine Vor- und/oder Rücksprung der Leitelemente wenigstens bereichsweise dreieckförmig ausgeführt ist, da bei einer solchen Ausführung der Leitelemente die Hinterkantenwirbel in einem einen hohen Vermischungsgrad gewährleistenden Umfang während des Betriebes eines Strahltriebwerkes vorliegen.

In Abhängigkeit des jeweils vorliegenden Anwendungsfalles besteht auch die Möglichkeit, zur Erzielung einer guten Durchmischung von Luft und Treibstoff die Leitelemente mit mehreren Vor- und Rücksprüngen auszubilden, deren Form und Abstände zueinander jeweils zumindest teilweise variieren.

Wiederum in Abhängigkeit des jeweils vorliegenden Anwendungsfalles besteht auch die Möglichkeit, die Leitelemente mit mehreren Vor- und Rücksprüngen auszubilden, deren Form und Abstände zueinander gleich sind.

Bei einer weiteren vorteilhaften und bauraumgünstigen Ausführungsform ist der Luft führende Kanal als Ringkanal ausgeführt und umgibt den Treibstoff führenden Kanal.

Sind zwei konzentrisch angeordnete und jeweils als Ringkanal ausgeführte Luft führende Kanäle vorgesehen, die den Treibstoff führenden Kanal umgeben, weist die Vorrichtung ebenfalls einen geringen Bauraumbedarf auf.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerkes, die mit einer Vorrichtung zum Mischen von Treibstoff und Luft ausgeführt ist;
- Fig. 2: eine vergrößerte Teildarstellung eines in Fig. 1 näher gekennzeichnet Bereiches II der die Vorrichtung zum Mischen von Luft und Treibstoff umfasst;
- Fig. 3: eine Seitenansicht der Vorrichtung zum Mischen von Luft und Treibstoff in Alleinstellung;
- Fig. 4: eine schematisierte Seiteneinzelansicht eines Leitelementes der Vorrichtung zum Mischen von Luft und Treibstoff;
- Fig. 5 bis Fig. 11: mehrere Fig. 4 entsprechende Darstellungen verschiedener Ausführungen von Leitelementen; und
- Fig. 12: eine vereinfachte dreidimensionale Einzelansicht eines Leitelementes.

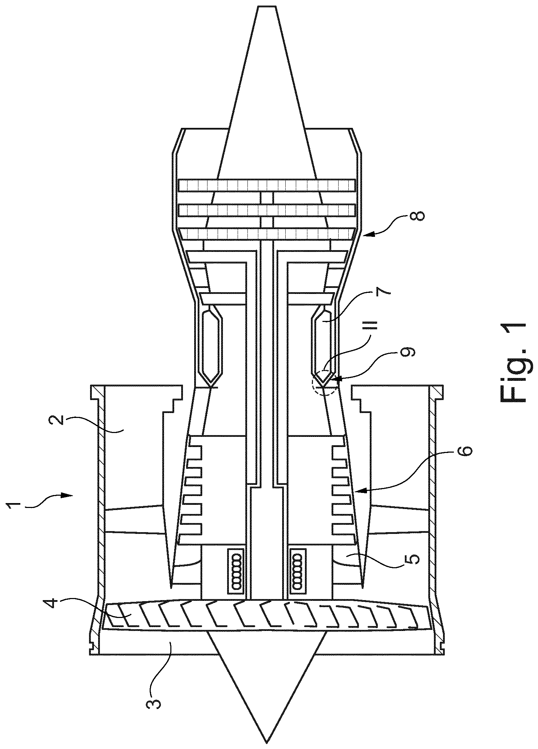

Fig. 1 zeigt eine Längsschnittansicht eines Strahltriebwerkes 1, das mit einem Nebenstromkanal 2 ausgeführt ist. Des Weiteren ist das Strahltriebwerk 1 mit einem Einlaufbereich 3 ausgebildet, an den sich stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Strömungseingangsseitig ist der Brenner 7 mit einer Vorrichtung 9 zum Mischen von Treibstoff und Luft ausgebildet, die in einem in Fig. 1 näher gekennzeichneten Bereich II vorgesehen ist.

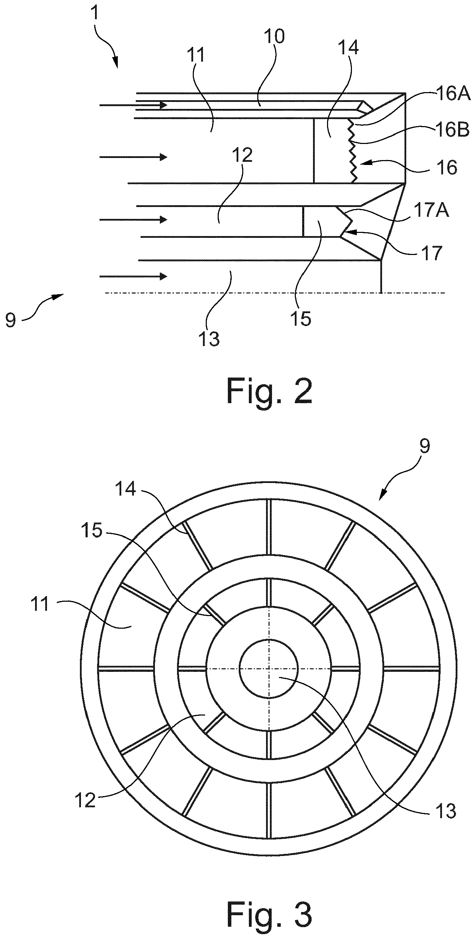

In Fig. 2 ist eine vergrößerte Teilansicht des in Fig. 1 näher gekennzeichneten Bereiches II, der die Vorrichtung 9 umfasst, näher dargestellt. Aus der Darstellung gemäß Fig. 2 geht hervor, dass die Vorrichtung 9 zum Mischen von Treibstoff und Luft des Strahltriebwerkes 1 mit mehreren Luft führenden Kanälen 11 und 12 und zwei Treibstoff führenden Kanälen 10 und 13 ausgebildet sind. In den Luft führenden Kanälen 11 und 12 sind vorliegend sich jeweils über die Kanalhöhe der Kanäle 11 und 12 erstreckende und in in Fig. 3 näher dargestellter Art und Weise über den Umfang der Kanäle 11 und 12 verteilt angeordnete Leitelemente 14, 15 vorgesehen, in deren Bereich der in den Luft führenden Kanälen 11 und 12 strömenden Luft zur Verbesserung einer Vermischung zwischen der Luft und des Treibstoffes stromab der Kanäle 11 und 12 ein Drall aufprägbar ist.

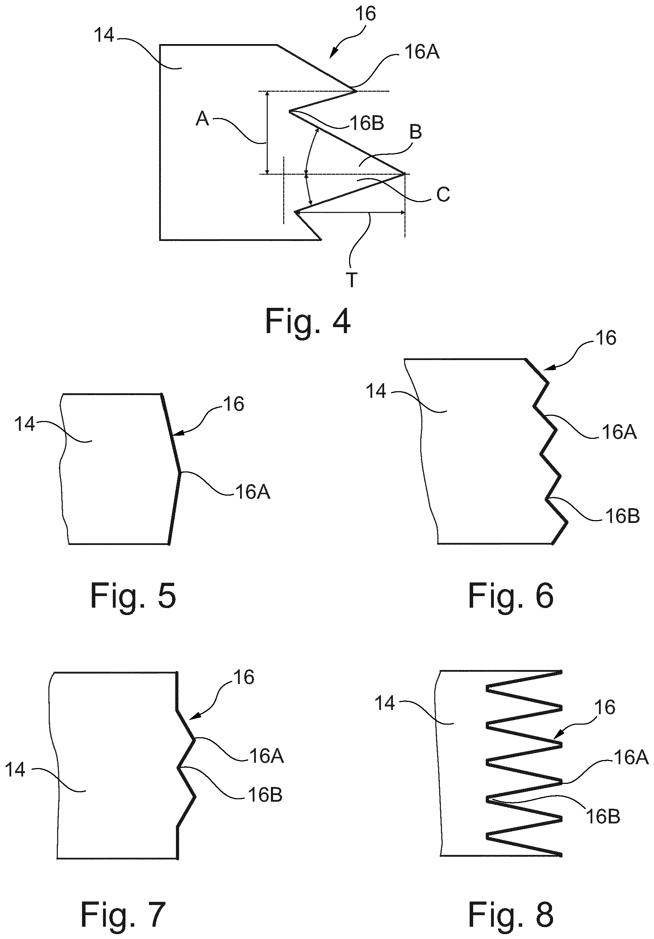

Die in den Kanälen 11 und 12 angeordneten Leitelemente 14 und 15 sind in einem in Strömungsrichtung der Luft hinteren Endbereich bzw. im Bereich einer Hinterkante 16, 17 jeweils mit gegenüber der Strömungsrichtung in der in Fig. 2 sowie in Fig. 4 bis Fig. 12 näher dargestellten Art und Weise mindestens einem wenigstens annähernd zumindest bereichsweise mit spitzer Kante ausgeführten Vorsprung 16A bzw. 17A und/oder mit wenigstens einem Rücksprung 16B ausgebildet, um die Hinterkanten 16 und 17 wenigstens annähernd gezackt auszuführen und der Luftströmung beim Verlassen der Leitelemente 14 und 15 so genannten Hinterkantenwirbel aufzuprägen, mittels welchen eine verbesserte Durchmischung zwischen der im Triebwerkskern 5 geführten Luft und dem im Bereich der Vorrichtung 9 zugeführten Treibstoff gewährleistet ist.

Durch die Ausgestaltung der Leitelemente 14 und 15 mit Vor- und/oder Rücksprüngen sind die Leitelemente 14 und 15 im Vergleich zu aus dem Stand der Technik bekannten Leitelementen, die mit geraden Hinterkanten ausgebildet sind, mit einem regelmäßigen oder unregelmäßigen gezackten Hinterkantenverlauf ausgeführt, um stromab der Leitelemente Treibstoffansammlungen zu vermeiden.

Die Anzahl der durch die Vor- und Rücksprünge im Bereich der Hinterkanten 16 und 17 gebildeten Zacken, ihre Positionierung zueinander, d. h. ein Abstand A zwischen zwei Zacken, eine Zackentiefe T sowie Winkel B und C der Zackenflanken werden in Abhängigkeit des jeweils vorliegenden Anwendungsfalles ausgewählt, um eine möglichst gute Durchmischung von Luft und Treibstoff besonders auch in den Nachlaufgebieten der Leitelemente 14, 15 zu erreichen.

Ein guter Vermischungsgrad wird besonders dann erreicht, wenn die durch die Vor- und/oder Rücksprünge der Leitelemente 14, 15 im Bereich der Hinterkanten 16, 17 gebildeten Zacken wenigstens bereichsweise dreieckförmig ausgeführt sind und spitze Kanten aufweisen. Wellenförmige Hinterkanten, d. h. runde Formen und Kanten, sind zur Bildung von den Vermischungsgrad verbessernden Hinterkantenwirbeln stromab der Leitelemente 14 und 15 im Vergleich zu spitz zu laufenden Zacken weniger geeignet.

Fig. 5 bis Fig. 12 zeigen jeweils verschiedene Ausführungsformen eines Leitelementes 14, das im Bereich seiner Hinterkante 16 jeweils mit unterschiedlicher Anzahl an Vor- und/oder Rücksprüngen mit jeweils unterschiedlich ausgeführten Zacken ausgebildet ist.

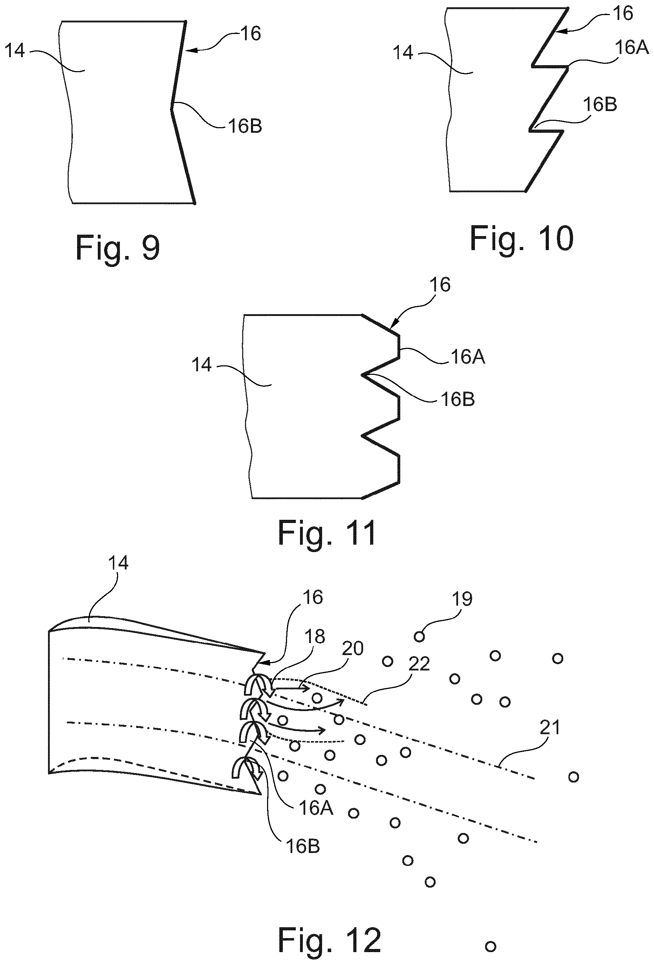

In Fig. 12 ist eine dreidimensionale Ansicht eines Leitelementes 14 mit gezackter Hinterkante 16 gezeigt, das ein profiliertes Gitter mit einem Schaufelprofil darstellt. Die im Bereich der gezackten Hinterkante 16 entstehenden Hinterkantenwirbel 18 verbessern eine Vermischung von Treibstoff 19 und Luft, da das stromab des Leitelementes 14 angeordnete Nachlaufgebiet 20 mit der freien Strömung 21 im Strahltriebwerk 1 interagieren kann. Dies resultiert aus der Tatsache, dass die Hinterkantenwirbel 18 die aus dem Stand der Technik bekannte Scherschicht 22 aufbrechen und zu einer homogeneren Verteilung des Luft-Treibstoff-Gemisches und damit zu einer effizienteren und effektiveren Verbrennung führen.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: Vorrichtung
- 11, 12: Luft führender Kanal
- 10, 13: Treibstoff führender Kanal
- 14, 15: Leitelement
- 16: Hinterkante
- 16A: Vorsprung
- 16B: Rücksprung
- 17: Hinterkante
- 17A: Vorsprung
- 18: Hinterkantenwirbel
- 19: Treibstoff
- 20: Nachlaufgebiet
- 21: freie Strömung
- 22: Scherschicht

## Patentansprüche

1. Vorrichtung (9) zum Mischen von Treibstoff und Luft eines Strahltriebwerkes (1) mit wenigstens einem Luft führenden Kanal (11, 12) und wenigstens einem weiteren Treibstoff führenden Kanal (10, 13), wobei zumindest in dem Luft führenden Kanal (11, 12) sich über die Kanalhöhe erstreckende und über den Umfang des Kanals verteilt angeordnete Leitelemente (14, 15) vorgesehen sind, in deren Bereich der im Luft führenden Kanal (11, 12) strömenden Luft zur Verbesserung einer Vermischung zwischen der Luft und des Treibstoffes stromab der Kanäle (10 bis 13) ein Drall aufprägbar ist,
**dadurch gekennzeichnet, dass**
mehrere Luft führende Kanäle (11, 12) vorgesehen sind und in jedem Luft führenden Kanal (11, 12) sich über die Kanalhöhe erstreckende und über den Umfang des jeweiligen Kanales (11, 12) verteilt angeordnete Leitelemente (14, 15) vorgesehen sind, die jeweils in einem in Strömungsrichtung der Luft hinteren Endbereich (16, 17) gegenüber der Strömungsrichtung mit wenigstens annähernd zumindest bereichsweise mit spitzer Kante ausgeführten dreiecksförmigen Vor- und Rücksprüngen (16A, 16B, 17A) ausgebildet sind, wobei die Endbereiche (16) der Leitelemente (14) eines Luft führenden Kanals (11) zu den Endbereichen (17) der Leitelemente (15) eines anderen Luft führenden Kanals (12) verschieden ausgebildet sind.

2. Vorrichtung nach Anspruch 1, **dadurch gekennzeichnet, dass** durch die dreiecksförmigen Vor- und Rücksprünge (16A, 16B, 17A) an einer Hinterkante (16, 17) des hinteren Endbereichs Zacken gebildet sind.

3. Vorrichtung nach Anspruch 1 oder 2, **dadurch gekennzeichnet, dass** die Leitelemente (14, 15) mit mehreren Vor- und Rücksprüngen (16A, 16B) ausgebildet sind, deren Form und Abstände (T) zueinander jeweils zumindest teilweise variieren.

4. Vorrichtung nach Anspruch 1 oder 2, **dadurch gekennzeichnet, dass** die Leitelemente (14, 15) mit mehreren Vor- und Rücksprüngen (16A, 16B) ausgebildet sind, deren Form und Abstände (T) zueinander gleich sind.

5. Vorrichtung nach einem der Ansprüche 1 bis 4, **dadurch gekennzeichnet, dass** jeder Luft führende Kanal (11, 12) als Ringkanal ausgeführt ist und den Treibstoff führenden Kanal (13) umgibt.

6. Vorrichtung nach einem der Ansprüche 1 bis 5, **dadurch gekennzeichnet, dass** wenigstens zwei konzentrisch angeordnete und jeweils als Ringkanal ausgeführte Luft führende Kanäle (11, 12) vorgesehen sind, die den Treibstoff führenden Kanal (13) umgeben.

## Claims

1. Device (9) for mixing propellant and air of a jet engine (1), having at least one air-conducting channel (11, 12) and at least one further, propellant-conducting channel (10, 13), wherein, at least in the air-conducting channel (11, 12), provision is made of guide elements (14, 15) which extend over the channel height and are arranged distributed over the circumference of the channel and in whose region, for the purpose of improving mixing between the air and the propellant downstream of the channels (10 to 13), a swirl can be imparted to the air flowing in the air-conducting channel (11, 12),
**characterized in that**
provision is made of multiple air-conducting channels (11, 12) and, in each air-conducting channel (11, 12), provision is made of guide elements (14, 15) which extend over the channel height and are arranged distributed over the circumference of the respective channel (11, 12) and, in each case in a rear end region (16, 17) in the flow direction of the air, are formed, at least approximately at least regionally with triangular projections and recesses (16A, 16B, 17A) with a sharp edge in relation to the flow direction, wherein the end regions (16) of the guide elements (14) of an air-conducting channel (11) are formed differently than the end regions (17) of the guide elements (15) of another air-conducting channel (12) .

2. Device according to Claim 1, **characterized in that**, serrations are formed by the triangular projections and recesses (16A, 16B, 17A) on a rear edge (16, 17) of the rear end region.

3. Device according to Claim 1 or 2, **characterized in that** the guide elements (14, 15) are formed with multiple projections and recesses (16A, 16B) whose shapes and distances (T) from one another vary at least partially in each case.

4. Device according to Claim 1 or 2, **characterized in that** the guide elements (14, 15) are formed with multiple projections and recesses (16A, 16B) whose shapes and distances (T) from one another are identical.

5. Device according to one of Claims 1 to 4, **characterized in that** each air-conducting channel (11, 12) is formed as an annular channel and surrounds the propellant-conducting channel (13).

6. Device according to one of Claims 1 to 5, **characterized in that** provision is made of at least two concentrically arranged air-conducting channels (11, 12), which are each formed as an annular channel and which surround the propellant-conducting channel (13).

## Revendications

1. Dispositif (9) de mélange de carburant et d'air d'un turboréacteur (1), ledit dispositif comprenant au moins un conduit d'air (11, 12) et au moins un autre conduit de carburant (10, 13), des éléments de guidage (14, 15) étant prévus au moins dans le conduit d'air (11, 12), lesquels s'étendent sur la hauteur de conduit et sont répartis sur la circonférence du conduit, une rotation pouvant être communiquée, dans la région des éléments de guidage, à l'air qui circule dans le conduit d'air (11, 12) pour améliorer le mélange entre l'air et le carburant en aval des conduits (10 à 13),
**caractérisé en ce que**
une pluralité de conduits d'air (11, 12) sont prévus et des éléments de guidage (14, 15) s'étendant sur la hauteur de conduit et répartis sur la circonférence du conduit respectif (11, 12) sont prévus dans chaque conduit d'air (11, 12), lesquels éléments de guidage sont chacun formés dans une région d'extrémité arrière (16, 17) par référence au sens d'écoulement de l'air avec des saillies et des retraits triangulaires (16A, 16B, 17A) qui sont pourvus au moins approximativement et au moins par endroits d'un bord pointu, les régions d'extrémité (16) des éléments de guidage (14) d'un conduit d'air (11) étant conçues de manière différente des régions d'extrémité (17) des éléments de guidage (15) d'un autre conduit d'air (12).

2. Dispositif selon la revendication 1, **caractérisé en ce que** les saillies et les retraits triangulaires (16A, 16B, 17A) forment des dents sur un bord arrière (16, 17) de la région d'extrémité arrière.

3. Dispositif selon la revendication 1 ou 2, **caractérisé en ce que** les éléments de guidage (14, 15) sont pourvus d'une pluralité de saillies et de retrait (16A, 16B) dont la forme et les distances (T) les uns par rapport aux autres varient à chaque fois au moins partiellement.

4. Dispositif selon la revendication 1 ou 2, **caractérisé en ce que** les éléments de guidage (14, 15) sont pourvus d'une pluralité de saillies et de retraits (16A, 16B) dont la forme et les distances (T) les uns par rapport aux autres sont les mêmes.

5. Dispositif selon l'une des revendications 1 à 4, **caractérisé en ce que** chaque conduit d'air (11, 12) est conçu comme un conduit annulaire et entoure le conduit de carburant (13).

6. Dispositif selon l'une des revendications 1 à 5, **caractérisé en ce qu'**au moins deux conduits d'air (11, 12) disposés concentriquement et conçus chacun comme un conduit annulaire sont prévus, lesquels entourent le conduit de carburant (13).
